# EUROPEAN PATENT APPLICATION

(11) **EP 1 087 303 A2**
(43) Date of publication of application: **28.03.2001**
(21) Application number: 00120662.2
(22) Date of filing: 21.09.2000
(51) Int. Cl.: G06F 17/30, G06F 3/033

(54) **Method and system for generating web pages with information displayed in a carousel**

(30) Priority: 22.09.1999 US 183040 P; 28.08.2000 US 649275
(71) Applicant: GoodHome.com, San Rafael, California 94903 (US)
(72) Inventor: Hakman, Kevin, San Francisco California 94111 (US)
(74) Representative: Grünecker, Kinkeldey, Stockmair & Schwanhäusser Anwaltssozietät

(57) **Abstract**

A method and system for displaying hierarchically related information. The display system displays information related to various categories within the hierarchy on a display so that it scrolls across the display. When a user selects the displayed information for a category, the display system displays information relating to sub-categories within the selected category so that the information scrolls across the display. The display system scrolls the information in a rotating manner such that the start of the information follows the end of the information. The display system also dynamically generates display pages that contain the information. The display system may retrieve the information describing the categories and sub-categories from a database after a request to retrieve the information is received to dynamically generate the display page.

## Description

### TECHNICAL FIELD

The present invention relates generally to displaying of information and, more particularly, to displaying of information within a carousel.

### BACKGROUND

Because the Internet facilitates electronic communications between vendors and purchasers, it is increasingly being used to conduct "electronic commerce." The Internet facilitates electronic commerce because it comprises a vast number of computers and computer networks that are interconnected through communication channels. Thus, many purchasers and vendors can communicate electronically using the Internet. Electronic commerce refers generally to commercial transactions that are at least partially conducted using the computer systems of the parties to the transactions. For example, a purchaser can use a personal computer to connect via the Internet to a vendor's computer. The purchaser can then interact with the vendor's computer to conduct the transaction.

The World Wide Web portion of the Internet is especially conducive to conducting electronic commerce. Many web servers have been developed through which vendors can advertise and sell products. The products can include items (*e.g.*, music) that are delivered electronically to the purchaser over the Internet and items (*e.g.*, books) that are delivered through conventional distribution channels (*e.g.*, a common carrier). More generally, an item is any product, service, or exchangeable entity of any type. A server computer system may provide an electronic version of a catalog that lists the items that are available to be purchased. A user, who is a potential purchaser, may browse through the catalog using a browser and select various items that are to be purchased. When the user has completed selecting the items to be purchased, the server computer system then prompts the user for information to complete the ordering of the items. This order information may include the purchaser's name, the purchaser's credit card number, and a shipping address for the order. The server computer system then typically confirms the order by sending a confirming web page to the client computer system and schedules shipment of the items.

The items within a catalog are often organized hierarchically into categories and sub-categories. To view information that is hierarchically organized, web pages may be provided for allowing a user to browse through the hierarchy. When browsing the hierarchy, a list of categories is displayed. When a user selects a listed category, another web page is provided that lists the sub-categories within the selected category. When a user selects a category that has no sub-categories, then a web page with information describing the items within that category is provided. The user can then select an item to view more detailed information about the item or to place an order to purchase the item. For example, if the catalog describes electronic equipment, one category may be computers and its sub-categories may be personal computers, business computers, and mainframe computers. The personal computer sub-category may include sub-categories such as IBM-compatible and Apple.

When information is provided on a web page, it is not always possible to have all the information visible simultaneously. For example, if a category has 20 or 30 items, it may not be possible to display an image and a textual description of each item simultaneously on a display. Conventional browsers allow users to scroll through such information on a web page. Typically, a user selects a thumb on a scroll bar to manually scroll through the information. The use of such a scrolling technique, however, can be disadvantage. In particular, users may be reluctant to spend the time to scroll through the information on a web page. Also, novice users may not know how to use the manual scrolling technique to access the nonvisible information. In either case, the user would only view information at the beginning of the web page. Thus, such users would be unlikely to purchase items that are not displayed at the beginning of the web page.

It would be desirable to have a system in which hierarchically organized data can be displayed in such a way that avoids the disadvantage of having to manually scroll through the information relating to sub-categories and items.

### SUMMARY OF THE INVENTION

A computer-based method and system for displaying hierarchically related information is provided. The display system displays on a display information related to various categories within the hierarchy. The displayed information scrolls across the display so that a user need not continually interact with the computer to scroll the information. When a user selects the displayed information for a category, the display system displays information relating to sub-categories within the selected category so that that information scrolls across the display. In one embodiment, the display system scrolls the information in a rotating manner such that the start of the information follows the end of the information and vice versa. The display system may also dynamically generate display pages (*e.g*., web pages) that contain the information. The display system may retrieve the information describing the categories and sub-categories from a database after a request to retrieve the information is received to dynamically generate the display page. In this way, the scrolled information need not be statically defined in a web page prior to receiving the request. The display system may also allow a user to control the speed and direction of scrolling. In one embodiment, the display system displays the information in a scroll area and provides a separate speed scroll area through which a user can specify the speed and direction of the scrolling. The speed and direction of the scrolling may be indicated by the distance and direction of the cursor from the center of the speed scroll area.

### BRIEF DESCRIPTION OF THE DRAWINGS

Figure 1 illustrates the layout of a web page that uses a carousel.
Figure 2 illustrates the scrolling of the information in a carousel of a web page.
Figure 3 illustrates a web page in which the user has moved the cursor over information for a new sub-category in the carousel.
Figure 4 illustrates a web page in which a user has selected to browse down the hierarchy by selecting information for a sub-category in the carousel.
Figure 5 illustrates a web page after a user has selected the "living room" sub-category.
Figure 6 illustrates a web page after a user has selected an item within a sub-category.
Figure 7 is a block diagram illustrating components of the display system in one embodiment.
Figure 8 is a block diagram illustrating a portion of an example hierarchy.
Figure 9 is a block diagram illustrating the contents of a node in the example hierarchy.
Figure 10 is a flow diagram illustrating the processing of generating a web page for a specific category.
Figure 11 is a flow diagram illustrating the processing to advance the display within the scroll area.
Figure 12 is a flow diagram illustrating processing for determining the speed based on selection of the speed scroll area.

### DETAILED DESCRIPTION OF THE INVENTION

A method and system for displaying information within a carousel is provided. In one embodiment, the display system generates web pages for browsing through a hierarchy of categories. The display system dynamically generates a web page when it receives a request for a web page relating to a selected category. In response to receiving the request, the display system retrieves information relating to the sub-categories of the selected category. The display system then generates a web page for displaying the retrieved information. When the web page is displayed, the information is displayed in an automatic scroll area. An automatic scroll area is an area in which the information is automatically scrolled either horizontally or vertically without continual interaction by a user. In one embodiment, the scroll area is referred to as a "carousel," because the display system scrolls the information in a rotating manner, that is the end of the information is followed by the beginning of information in a continuous loop.

The display space system allows the user to select information being displayed within the scroll area. The information may be selected in various ways (*e.g.*, mouse over or clicking). In one embodiment, when a user moves the cursor over information in the scroll area, the display system displays additional related information outside the scroll area. When the user clicks on information in the scroll area, the display system displays another web page relating to the selected information. For example, if information relating to various categories is currently being displayed in the scroll area, then when the user clicks on information in one category, the display system dynamically generates a web page with a scroll area that contains information relating to the sub-categories of the selected category. In this say, the scroll area can be used to browse through the entities (*i.e.*, categories and items) of a hierarchy. The display system generates the web pages dynamically by accessing information describing the browse hierarchy which may be stored in a database. The information related to an entity may include images and textual description of the entity.

The display system allows a user to select the speed and direction of the scrolling. In one embodiment, the display system provides a speed scroll area through which a user can indicate the speed and direction of the scrolling. When a user selects the right half of the speed scroll area, the information in the scroll area scrolls to the left to browse to information to the right. When the user selects the left half of the speed scroll area, the information in the scroll area scrolls to right to browse to information to the left. The distance from the center of the speed scroll area that the user selects indicates the speed of the scrolling. In particular, when the user selects a portion of the speed scroll area that is farthest from the center, then the scrolling is the fastest. When the user selects the center of the speed scroll area, the scrolling stops. The selection of a portion of the speed scroll area may occur when the user positions the cursor over the speed scroll area. When a user moves the cursor outside of the speed scroll area, the scrolling may continue at the last designated speed and direction or it may stop. For example, if a user moves the cursor from the speed scroll area to the scroll area, the display system may stop the scrolling to allow the user an opportunity to select information in the scroll area. In one embodiment, the display system may decelerate the scrolling when stopping, rather than immediately stopping to present a more visually pleasing effect.

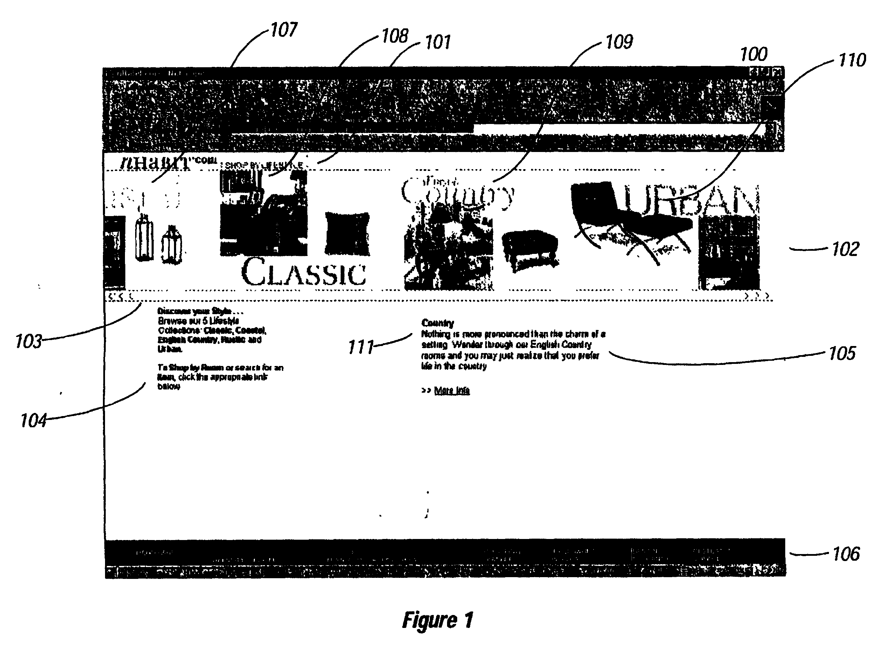

Figures 1-6 illustrate example web pages generated by the display system in one embodiment. In this example, the display system allows users to browse through items that are for sale in a furniture store. The items in the furniture store are hierarchically organized (*e.g.*, "bedrooms" and "master bedroom"). Figure 1 illustrates the layout of a web page that uses a carousel. Web page 100 includes a hierarchy path area 101, scroll area 102, speed scroll area 103, category information area 104, sub-category information area 105, and navigation area 106. The hierarchy path area lists the names of the categories in the path from the root category of the hierarchy to the currently selected category. In this example, the web page is displaying information for the category "shop by lifestyle." The scroll area includes information relating to the sub-categories of "coastal" 107, " classic" 108, "English country" 109, and "urban" 110. The information for each sub-category includes an image related to that sub-category. The speed scroll area, in this example, is separate from the scroll area. When a user positions the cursor within the speed scroll area, the speed of the scrolling is adjusted. When the cursor is positioned in the right half of the speed scroll area, then the information in the scroll area is scrolled to the left as a new information is displayed on the right. When the cursor is positioned in the left half of the speed scroll area, then the information in the scroll area is scrolled to the right as new information is displayed on the left. The distance from the center point 111 of the speed scroll area indicates the speed of the scrolling. When the cursor is positioned at the left-most or right-most part of the scroll area, then scrolling is at its highest speed. The category information area displays information relating to the currently selected category which in this example is the "shop by lifestyle" category. When the user positions the cursor over information in the scroll area, then the display system displays additional information related to the corresponding sub-category in the sub-category information area. In this example, the sub-category information area is displaying information relating to the "English country" sub-category. The navigation area allows the user to select various other web pages such as a shopping basket web page.

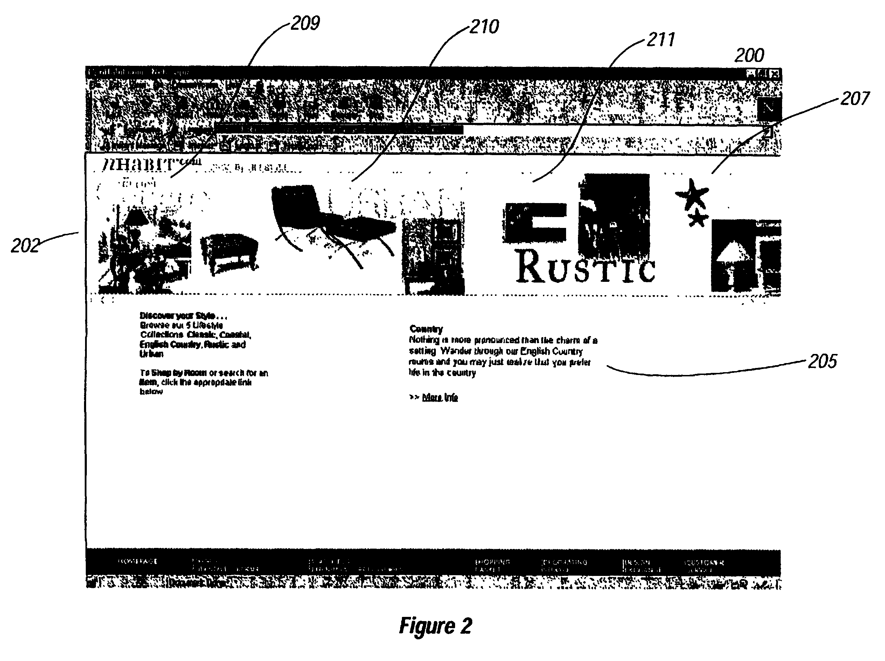

Figure 2 illustrates the scrolling of the information in a carousel of a web page. Web page 200 corresponds to web page 100 with the information in its carousel scrolled to the left. In this example, scroll area 202 contains information relating to the sub-categories scrolled in from the left relative to the information in scroll area 102 of Figure 1. For example, the information for the "urban" sub-category is shown at position 110 in Figure 1 and is shown moved to the left at position 210 in Figure 2. As the information in the scroll area is scrolled to the left, information for additional sub-categories is displayed at the right. In this example, information relating to the "rustic" sub-category 211 is displayed. The information in the right-most area of the scroll area displays information relating to the "coastal" sub-category. In Figure 1, information for the "coastal" sub-category was displayed in the left-most portion of the scroll area. Thus, the displaying of the information relating to the "coastal" sub-category on the right of the scroll area corresponds to rotating scrolling, that is, the last information is followed by the first information and vice versa when scrolling in the other direction. The information in the sub-category information area corresponds to the sub-category that was last selected by the user.

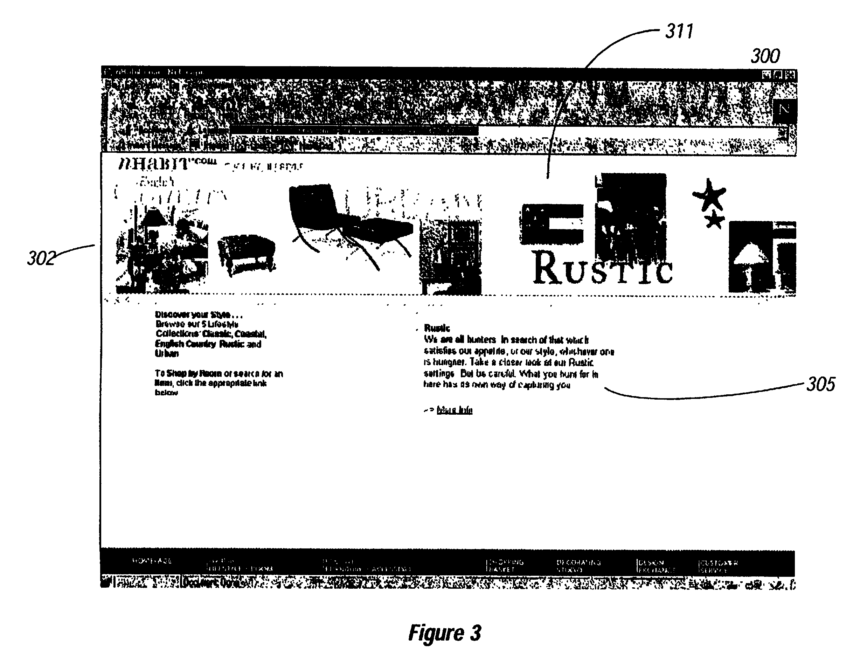

Figure 3 illustrates a web page in which the user has moved the cursor over information for a new sub-category in the carousel. Web page 300 contains the scroll area 302 that corresponds to the scroll area of Figure 2. The sub-category information area 305, however, contains information relating to the "rustic" sub-category, rather than the "English country" sub-category. When a user moves the cursor over the information 311 for the "rustic" sub-category, the display system displays additional information relating to that sub-category in the sub-category information area.

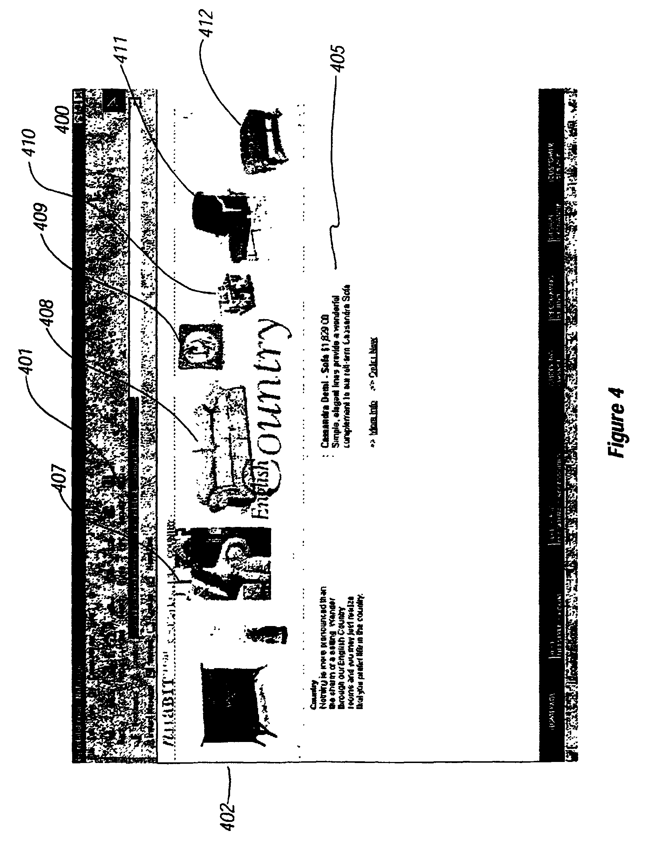

Figure 4 illustrates a web page in which a user has selected to browse down the hierarchy by selecting information for a sub-category in the carousel. Web page 400 contains a scroll area 402 with information relating to sub-categories of the "English country" category. In this example, the sub-categories of the "English country" category are "living room" and "bedroom." In this example, the scroll area also contains information relating to items within the "living room" and "bedroom" sub-categories, that is, the lowest level categories and the items within each of those categories are displayed together within the carousel. The information 407 relates to the "living room" sub-category. The information areas 408-412 contain information related to items within the "living room" sub-category. For example, information area 408 contains the image of a sofa that is currently described in sub-category information area 405. Although in this example, the display system is displaying information relating to a leaf sub-category along with the items within that subcategory at the same time, one skilled in the art would appreciate that the leaf sub-categories could be displayed by themselves in the scroll area and the information relating to the items within the leaf sub-categories could be displayed when the information relating to that leaf sub-category is selected.

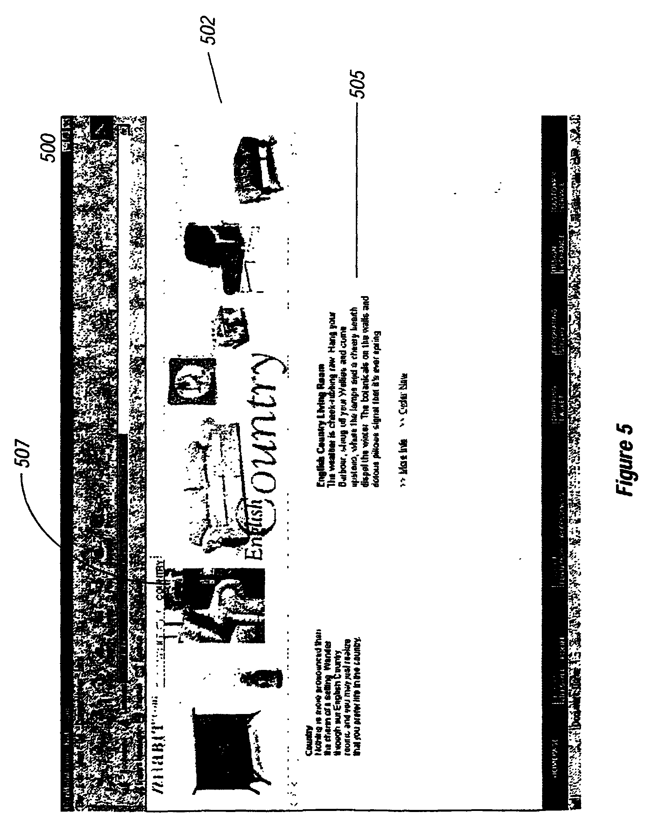

Figure 5 illustrates a web page after a user has selected the "living room" sub-category. Web page 500 includes the sub-category information area that contains additional information about the "living room" sub-category. The display system displays this additional information when a user moves the cursor over the information area 507 for the "living room" sub-category in the scroll area 502.

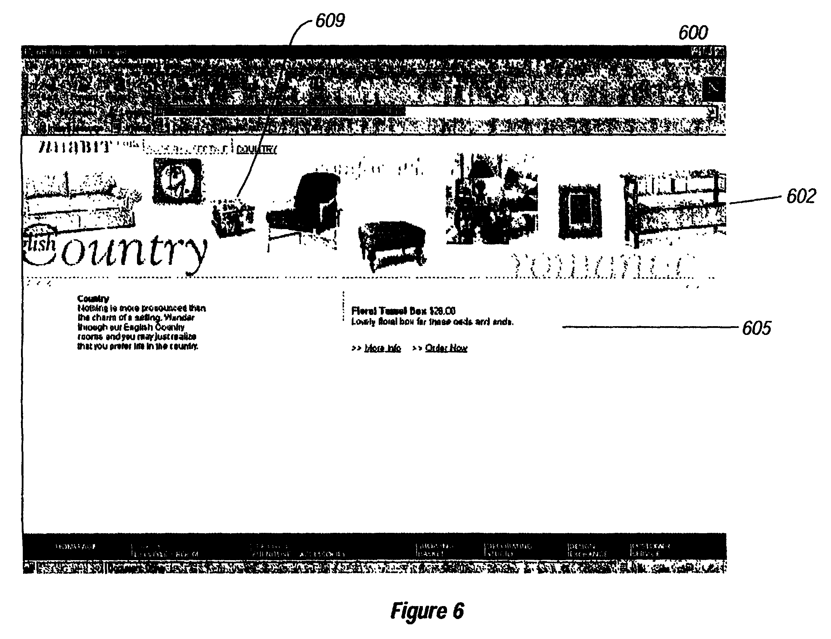

Figure 6 illustrates a web page after a user has selected an item within a sub-category. Web page 600 includes a sub-category information area 605 that contains additional information about the item described in information area 609 of the scroll area 602. The display system displays this additional information when a user moves the cursor over the information area 609.

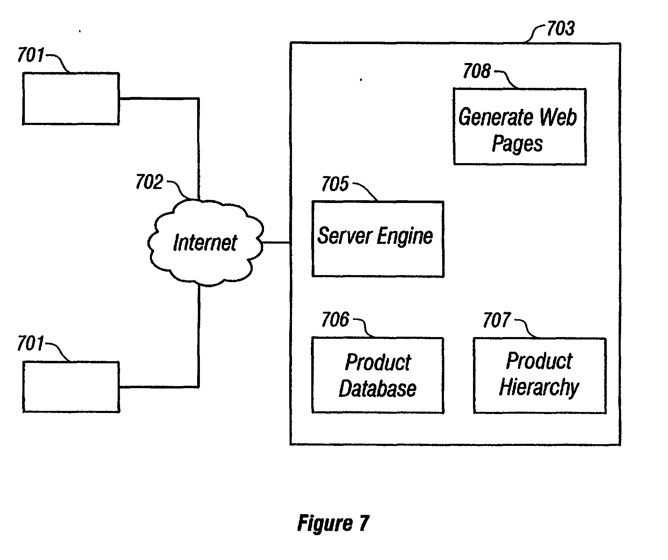

Figure 7 is a block diagram illustrating components of the display system in one embodiment. The client computers 701 and the server computer 703 are interconnected via the Internet 702. The computers may include a central processing unit, memory, input devices (*e.g.*, keyboard and pointing device), output devices (*e.g.*, display devices), and storage devices (*e.g.*, disk drives). The memory and storage devices are computer-readable media that may contain computer instructions that implement the display system. The client computers may include a browser to access web pages of the server computer via the Internet. The server computer implements the display system and includes a conventional server engine 705, a product (item) database 706, a product hierarchy 707, and a generate web pages component 708. The server engine receives requests for resources (*e.g.* web pages) via the Internet and coordinates the generation and transmission of the resources. The generate web pages component receives requests for web pages corresponding to categories within the product hierarchy and generates web pages for those categories.

One skilled in the art will appreciate the concepts of the display system can be used in environments other than the World Wide Web. For example, the display system can generate displays that use a carousel to display hierarchical information without using web pages by directly writing information to a display or by generating display pages (other than HTML-based web pages) for controlling the display of information. Also, various communication channels, other than the Internet may be used such as a local area network, a wide area network, or a point-to-point, dial-up connection. The server system may also comprise any combination of hardware or software that can support the display system. In particular, the web server may actually include multiple computers. A client system may comprise any combination of hardware and software that interacts with the server system.

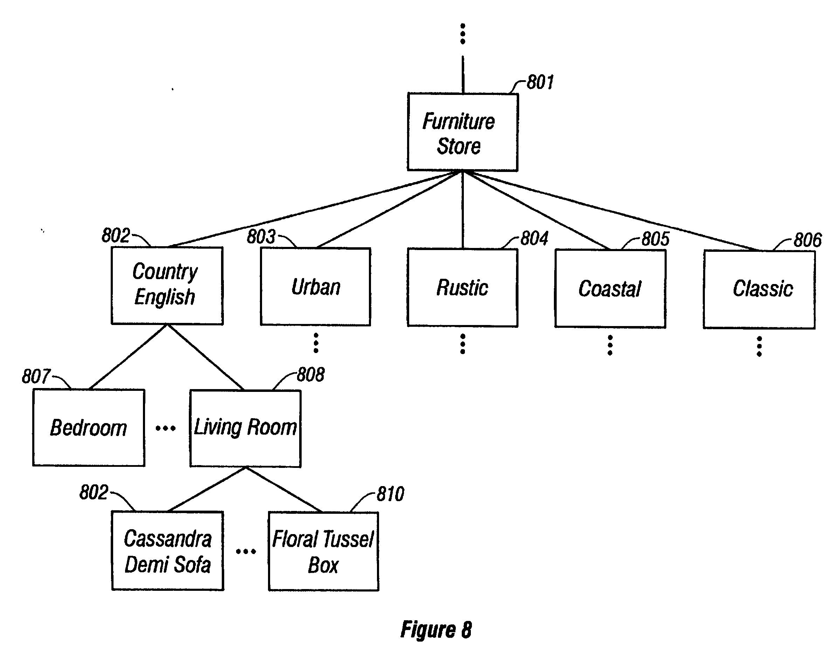

Figure 8 is a block diagram illustrating a portion of an example hierarchy. Each entity in the hierarchy is represented by a node. In this example, the portion of the hierarchy corresponds to the sub-categories relating to a furniture store. The "furniture store" category is represented by node 801. The "furniture store" category has the sub-categories of "English country," "urban," "rustic," "coastal," and "classic" as represented by nodes 802-806, respectively. The "English country" sub-category has sub-categories that include the "bedroom" sub-category and the "living room" sub-category as represented by nodes 807-808. The "living room" sub-category includes a sofa item and a box item as represented by leaf nodes 809-810.

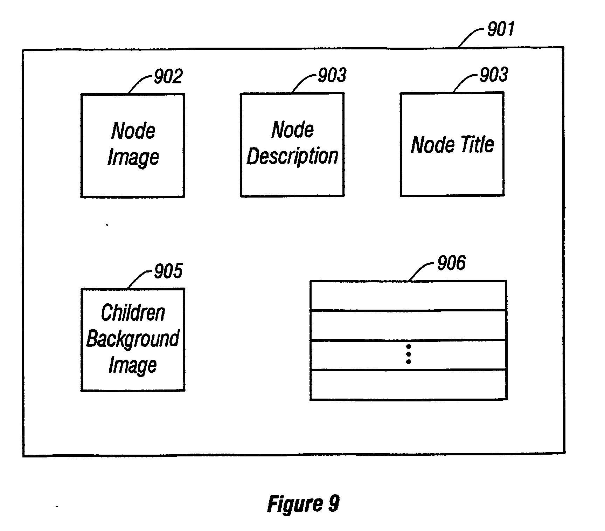

Figure 9 is a block diagram illustrating the contents of a node in the example hierarchy. The node 901 corresponds to a category within the hierarchy. The node contains a node image 902, a node description 903, a node title 904, children background image 905, and a child node table 906. The display system uses the node image as the information to display in the scroll area for the category or item. The display system displays the node description in the sub-category information area when that category is selected by moving the cursor over the information area for that category. The node title is used to display the name of the category. The display system may overlay of the children background image over the images of the sub-categories for that category. The child node table contains pointers to the child nodes.

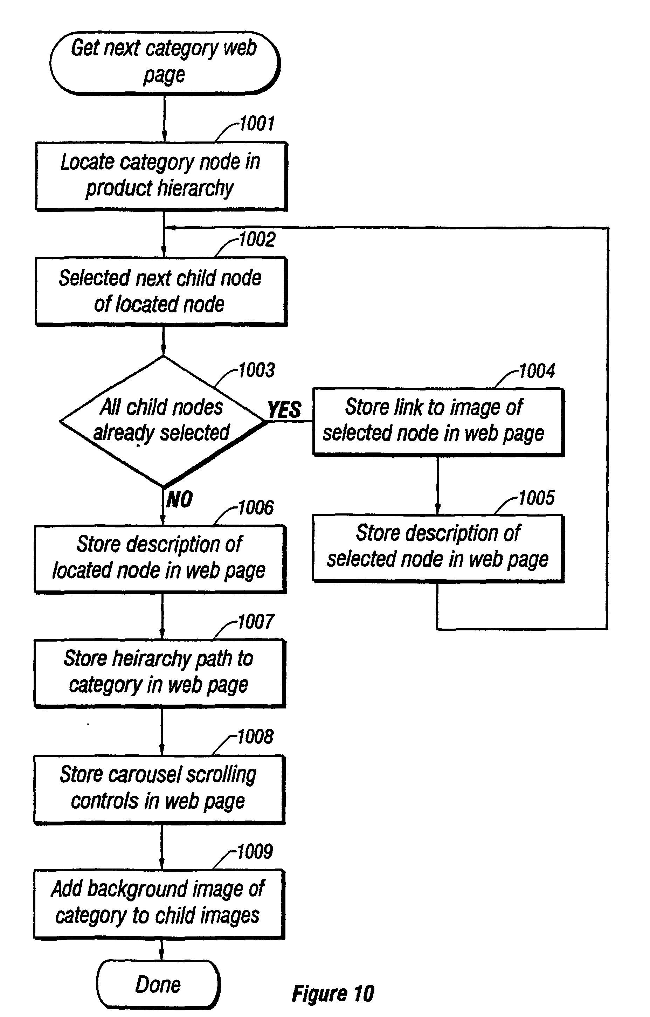

Figure 10 is a flow diagram illustrating the processing of generating a web page for a specific category. The function that performs this processing is passed in the identifier of the category. The identifier of a category may include the name of each node within the hierarchy from the root node to the node representing that category. In step 1001, the function locates the category node in the product hierarchy. The category node may be located by traversing the hierarchy starting from the root node and visiting each node indicated in the identifier of the passed category. In steps 1002-1005, the function loops retrieving information relating to a sub-category of the passed category. In step 1002, the function selects the next child node of the located node. In step 1003, if all the child nodes have already been selected, the function continues at step 1004, else the function continues at step 1006. In step 1004, the function adds the link to the image of the selected child node to the web page. In step 1005, the function adds the description of the selected child node to the web page and loops to step 1002 to select the next child and loops to step 1002 to select the next child node. Although the description is added to the web page, it may not be visible until the corresponding category is selected. In step 1006, the function adds the description of the located node to the category information area of the web page. In step 1007, the function adds the hierarchy path to the category to the hierarchy area of the web page. This step corresponds to the storing of the information in the hierarchy area of a web page. In step 1008, the function adds the speed control area to the web page. In step 1008, the function adds the background image of the category to its child images and then completes.

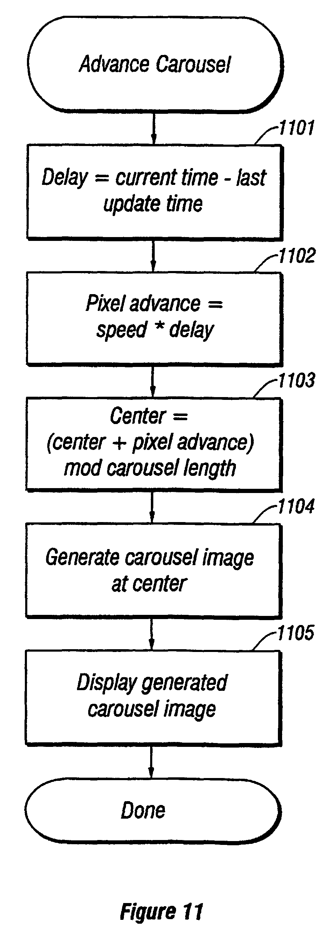

Figure 11 is a flow diagram illustrating the processing to advance the display within the scroll area. This function that implements this processing executes on a client computer and is invoked frequently (*e.g.*, every 10th of a second) so that the scrolling can be affected with minimal flickering. In step 1101, the function calculates the time since the scroll area was last updated. In step 1102, the function calculates the number of pixels to advance the images in the scroll area based on the scrolling speed in pixels per second. In step 1103, the function determines what pixel of the scroll area information is to be displayed at the center of the scroll area. The pixels may be numbered from the start to the end of the information. Since the start follows the end, the center point is the remainder of the current center plus the number of pixels to advance divided by the length of the information to be displayed in the carousel. In step 1104, the function generates the carousel image to be displayed. In step 1105, the function displays the generated carousel image and completes.

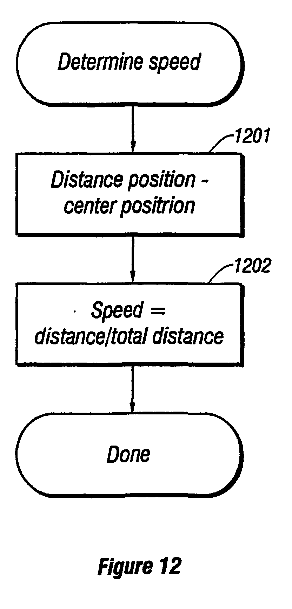

Figure 12 is a flow diagram illustrating processing for determining the speed based on selection of the speed scroll area. In step 1201, the function determines the distance between the position of the cursor and the center position of the speed scroll area. In step 1202, the function sets the speed and direction of the scrolling. The direction is indicated by the sign (*i.e.*, positive or negative) of the speed. The function then completes.

From the foregoing, it will be appreciated that although specific embodiments of the purchasing system have been described for purposes of illustration, various modifications may be made without deviating from the spirit and the scope of the invention. Accordingly, the invention is not limited except by the following claims.

## Claims

1. A method in a computer system for generating web pages for browsing through a hierarchy, the hierarchy having categories and sub-categories, the method comprising:
receiving an indication of a category to display;
retrieving information relating to the sub-categories of the indicated category; and
adding to a web page information describing the retrieved information wherein when the web page is displayed the retrieved information is automatically scrolled on a display so that a user can view the retrieved information as it is scrolled.

2. The method of claim 1 wherein the user can control the speed of the scroll.

3. The method of claim 1 wherein the user can control the direction of the scroll.

4. The method of claim 1 including adding a speed scroll area to the web page that the user can use to control the speed and direction of the scrolling.

5. The method of claim 1 including sending the web page to a client computer via the Internet.

6. The method of claim 1 wherein the retrieved information is scrolled in a rotating manner.

7. The method of claim 1 wherein the retrieved information includes images relating to the sub-categories.

8. The method of claim 1 including retrieving information relating to items and adding the retrieved information to the web page.

9. A method in a computer system for displaying hierarchically related information, the method comprising:
displaying information relating to a plurality of categories within the hierarchy wherein the displayed information is scrolled on a display; and
when a category is selected, displaying information relating to a plurality of sub-categories within the selected category wherein the displayed information is scrolled on the display.

10. The method of claim 9 wherein the displaying is based on display pages that are dynamically generated.

11. The method of claim 9 wherein a user can control the speed and direction of the scrolling using an area that is separate from the area in which the information is displayed.

12. The method of claim 9 wherein the information is scrolled in a rotating manner.
